# EUROPEAN PATENT APPLICATION

(11) **EP 4 778 902 A1**
(43) Date of publication of application: **22.07.2026**
(21) Application number: 24882376.7
(22) Date of filing: 22.10.2024
(51) Int. Cl.: C04B 28/02, B28B 1/30, C01B 33/26, C01F 7/164, C04B 22/08, C04B 22/14

(54) **CALCIUM ALUMINOSILICATE-BASED COMPOUND, QUICK HARDENING MATERIAL, QUICK HARDENING MORTAR MATERIAL, QUICK HARDENING CONCRETE MATERIAL, METHOD FOR SHAPING HARDENED MORTAR BODY, AND METHOD FOR SHAPING HARDENED CONCRETE BODY**

(30) Priority: 23.10.2023 JP 2023181750
(71) Applicant: Denka Company Limited, Tokyo 103-8338 (JP)
(72) Inventor: YOSHIOKA, Maho, Tokyo 103-8338 (JP); HIGUCHI, Takayuki, Tokyo 103-8338 (JP)
(74) Representative: Müller-Boré & Partner Patentanwälte PartG mbB
(86) International application number: PCT/JP2024/037543
(87) International publication number: WO 2025/089265

(57) **Abstract**

An object is to provide a calcium aluminosilicate-based compound that, when added to cement or the like, has high compressive strength and is capable of imparting good surface finish properties. The calcium aluminosilicate-based compound contains, as chemical components, 30 mass% or more and 60 mass% or less of CaO, 10 mass% or more and 60 mass% or less of Al₂O₃, 1 mass% or more and 15 mass% or less of SiO₂, 10 ppm or more and 50,000 ppm or less of P₂O₅ in terms of mass ratio, and 0.1 mass% or more and 1 mass% or less of MgO.

## Description

### Technical Field

The present invention relates to a calcium aluminosilicate-based compound and a quick hardening material for accelerating hardening of a hydraulic substance such as cement, and a quick hardening mortar material, a quick hardening concrete material, a method for shaping a hardened mortar body, and a method for shaping a hardened concrete body using the same.

### Background Art

As a quick hardening material for imparting quick hardening properties to a hydraulic substance such as cement, calcium aluminate, gypsum, and the like are used to achieve hardening and strength development in a short time.

For example, Patent Literature 1 below describes a cement admixture material containing calcium aluminate and gypsum. According to the cement admixture material of Patent Literature 1, strength development is high, and cracking can be suppressed.

### Citation List

### Patent Literature

Patent Literature 1: JP 2023-49713 A

### Summary of Invention

### Technical Problem

However, quick hardening cement containing a quick hardening material is prone to deterioration in surface properties of the cast surface, and even when the cast surface is finished with a trowel, spots, unevenness, and the like are likely to occur on the surface upon hardening, which may result in poor surface finish properties after hardening. Also in the cement admixture described in Patent Literature 1, the surface finish properties have not been studied.

The present invention has been made in view of such circumstances, and an object of the present invention is to provide a calcium aluminosilicate-based compound that, when added to cement or the like, has high initial compressive strength and is capable of imparting good surface finish properties, a quick hardening material, a quick hardening mortar material containing the quick hardening material, a quick hardening concrete material, a method for shaping a hardened mortar body, and a method for shaping a hardened concrete body.

### Solution to Problem

As a result of intensive studies to solve the above problems, the present inventors have found that the problems can be solved by a calcium aluminosilicate-based compound containing CaO, Al₂O₃, SiO₂, P₂O₅, and MgO at a predetermined ratio as chemical components, thereby achieving the present invention. That is, the present invention is as follows.
[1] A calcium aluminosilicate-based compound containing, as chemical components, 30 mass% or more and 60 mass% or less of CaO, 10 mass% or more and 60 mass% or less of Al₂O₃, 1 mass% or more and 15 mass% or less of SiO₂, 10 ppm or more and 50,000 ppm or less of P₂O₅ in terms of mass ratio, and 0.1 mass% or more and 1 mass% or less of MgO.
[2] The calcium aluminosilicate-based compound according to [1], which contains, as a chemical component, Fe₂O₃ in an amount of 0.1 mass% or more and 3 mass% or less.
[3] The calcium aluminosilicate-based compound according to [1] or [2], which contains, as a chemical component, ZrO₂ in a mass ratio of 100 ppm or more and 5,000 ppm or less.
[4] A quick hardening material containing 50 parts by mass or more and 250 parts by mass or less of gypsum with respect to 100 parts by mass of the calcium aluminosilicate-based compound according to any one of [1] to [3].
[5] The quick hardening material according to [4], which contains S (sulfur) in an amount of 20 mass% or more and 30 mass% or less in terms of oxide.
[6] The quick hardening material according to [4] or [5], which contains fluorine in a mass ratio of 300 ppm or more and 40,000 ppm or less.
[7] The quick hardening material according to any one of [4] to [6], wherein a loss on ignition before and after a heat treatment from room temperature to 950°C is 0.1 mass% or more and 3 mass% or less.
[8] A quick hardening mortar material containing cement, the quick hardening material according to [4] to [7], and a fine aggregate.
[9] A quick hardening concrete material containing cement, the quick hardening material according to [4] to [7], a fine aggregate, and a coarse aggregate.
[10] A method for shaping a hardened mortar body, including producing a quick hardening mortar composition by kneading and mixing cement, the quick hardening material according to any one of [4] to [7], water, and an aggregate, laminating the quick hardening mortar composition, and hardening the quick hardening mortar composition to produce a hardened mortar body.
[11] A method for shaping a hardened concrete body, including producing a quick hardening concrete composition by kneading and mixing cement, the quick hardening material according to any one of [4] to [7], water, a fine aggregate, and a coarse aggregate, laminating the quick hardening concrete composition, and hardening the quick hardening concrete composition to produce a hardened concrete body.

### Advantageous Effects of Invention

According to the present invention, it is possible to provide a calcium aluminosilicate-based compound that, when added to cement or the like, has high initial compressive strength and is capable of imparting good surface finish properties, a quick hardening material, a quick hardening mortar material containing the quick hardening material, a quick hardening concrete material, a method for shaping a hardened mortar body, and a method for shaping a hardened concrete body.

### Description of Embodiments

Hereinafter, the calcium aluminosilicate-based compound, the quick hardening material, the quick hardening mortar material, the quick hardening concrete material, the method for shaping a hardened mortar body, and the method for shaping a hardened concrete body of the present invention will be described in detail, but the present invention is not limited to the embodiments. In addition, a numerical range defined using a symbol "to" includes numerical values at both ends (upper limit and lower limit) of "to".

### [Calcium aluminosilicate-based compound]

The calcium aluminosilicate-based compound of the present invention contains, as chemical components, 30 mass% or more and 60 mass% or less of CaO, 10 mass% or more and 60 mass% or less of Al₂O₃, 1 mass% or more and 15 mass% or less of SiO₂, 10 ppm or more and 50,000 ppm or less of P₂O₅ in terms of mass ratio, and 0.1 mass% or more and 1 mass% or less of MgO.

In addition, as a chemical component, CaO is preferably contained in an amount of 35 mass% or more and 55 mass% or less, and more preferably 40 mass% or more and 50 mass% or less. Al₂O₃ is preferably contained in an amount of 20 mass% or more and 50 mass% or less, and more preferably 25 mass% or more and 45 mass% or less. SiO₂ is preferably contained in an amount of 2 mass% or more and 14 mass% or less, and more preferably 3 mass% or more and 13 mass% or less. P₂O₅ is preferably contained in a mass ratio of 100 ppm or more and 5,000 ppm or less, and more preferably 300 ppm or more and 1,000 ppm or less. MgO is preferably contained in an amount of 0.2 mass% or more and 0.9 mass% or less, and more preferably 0.3 mass% or more and 0.8 mass% or less.

By setting the contents of CaO, Al₂O₃, SiO₂, P₂O₅, and MgO within the above numerical ranges, a calcium aluminosilicate-based compound capable of shaping quick hardening mortar having high initial compressive strength and good surface finish properties is obtained.

The calcium aluminosilicate-based compound according to the present embodiment can be obtained, for example, by using a raw material containing calcium, a raw material containing aluminum, and a raw material containing silicon as main raw materials, further blending and mixing raw materials containing phosphorus and magnesium, respectively, so as to achieve a desired formulation, and melting the mixed raw materials in an electric furnace, followed by cooling. Alternatively, it can be obtained by firing the mixed raw materials resulting from blending and mixing in a kiln.

Examples of the raw material containing calcium include quicklime, limestone, and slaked lime. Examples of the raw material containing aluminum include bauxite and aluminum residual ash. Examples of the raw material containing silicon include silica stone. Examples of the raw material containing phosphorus include calcium phosphate. Examples of the raw material containing magnesium include magnesium oxide and magnesium hydroxide.

The calcium aluminosilicate-based compound according to the present embodiment can contain components other than CaO, Al₂O₃, SiO₂, P₂O₅, and MgO described above, and preferably contains either one or both of Fe₂O₃ and ZrO₂.

When Fe₂O₃ is contained as a chemical component, the content thereof in the calcium aluminosilicate-based compound is preferably 0.1 mass% or more and 3 mass% or less, more preferably 0.2 mass% or more and 2.5 mass% or less, and still more preferably 0.3 mass% or more and 2 mass% or less.

When ZrO₂ is contained as a chemical component, the content thereof in the calcium aluminosilicate-based compound is preferably 100 ppm or more and 5,000 ppm or less, more preferably 200 ppm or more and 4,000 ppm or less, and still more preferably 300 ppm or more and 3,000 ppm or less in terms of mass ratio.

The incorporation of Fe₂O₃ and/or ZrO₂ enables achieving a balance between hardening acceleration ability and strength development.

In addition, TiO₂, MnO, Na₂O, K₂O, or the like may be contained as a component derived from the raw material, but there is no particular problem as long as the effect of the present invention is not inhibited.

The calcium aluminosilicate-based compound according to the present embodiment preferably has a Blaine specific surface area of 4,000 cm²/g or more and 9,000 cm²/g or less, and more preferably 4,500 cm²/g or more and 8,000 cm²/g or less.

The Blaine specific surface area of calcium aluminosilicate can be measured based on JIS R 5201 (Physical testing methods for cement).

The calcium aluminosilicate-based compound according to the present embodiment can be used in either a crystalline form or an amorphous form, but is preferably in an amorphous form because it hardens in a short time and exhibits high initial strength development thereafter.

The vitrification rate of the calcium aluminosilicate-based compound is preferably 90% or more, and more preferably 95% or more. By setting the vitrification rate to 90% or more, it is possible to produce a hardened mortar body and a hardened concrete body exhibiting high strength development in a short period of time, that is, high initial strength development. The vitrification rate of the calcium aluminosilicate-based compound can be adjusted by adjusting the heating/melting temperature or the cooling method.

The vitrification rate of the calcium aluminosilicate-based compound can be determined by powder X-ray diffraction/Rietveld analysis. That is, the calcium aluminosilicate-based compound is heated and cooled to be crystallized, powder X-ray diffraction measurement of the crystallized calcium aluminosilicate-based compound is performed, and the main peak area S₀ is determined using quantitative software. In addition, powder X-ray diffraction measurement of the calcium aluminosilicate-based compound before heating is performed, and the main peak area S is determined using quantitative software. The vitrification rate can be determined from the ratio between the main peak area S₀ of the crystallized calcium aluminosilicate-based compound and the main peak area S of the calcium aluminosilicate-based compound before heating. In addition, a predetermined amount of an internal standard substance such as aluminum oxide or magnesium oxide is added to a sample, followed by sufficient mixing using an agate mortar or the like, and then powder X-ray diffraction measurement is performed. By analyzing the measurement result with quantitative software, the production amount of the mineral composition can be obtained, and the remainder can be taken as the sample vitrification rate. As the quantitative software, "SIROQUANT" manufactured by Sietronics Pty Ltd. or the like can be used.

### [Quick hardening material]

The quick hardening material of the present invention contains 50 parts by mass or more and 250 parts by mass or less of gypsum with respect to 100 parts by mass of the calcium aluminosilicate-based compound of the present invention described above.

### (Gypsum)

Examples of the gypsum used in the present invention include anhydrous gypsum, hemihydrate gypsum, and dihydrate gypsum. Examples thereof also include natural gypsum, by-product gypsum, and gypsum obtained by subjecting such gypsum to a heat treatment. Among these, anhydrous gypsum is preferable in view of its high strength development.

In addition, it is preferable to use by-product gypsum formed of anhydrous gypsum containing fluorine because the inclusion of a trace amount of fluorine in the quick hardening material can enhance the fluidity of a cement composition to facilitate ensuring initial handleability.

The content of fluorine in the quick hardening material is preferably 300 ppm or more and 40,000 ppm or less, more preferably 1,000 ppm or more and 35,000 ppm or less, and still more preferably 2,000 ppm or more and 30,000 ppm or less in terms of mass ratio.

The content of gypsum in the quick hardening material is 50 parts by mass or more and 250 parts by mass or less, preferably 60 parts by mass or more and 200 parts by mass or less, and more preferably 70 parts by mass or more and 150 parts by mass or less with respect to 100 parts by mass of the calcium aluminosilicate-based compound. By setting the content of gypsum to 50 parts by mass or more and 250 parts by mass or less, the initial compressive strength of a hardened mortar body and a hardened concrete body to which the quick hardening material is added can be increased, and the surface finish properties can be improved.

In addition, the quick hardening material preferably contains S (sulfur) in an amount of 20 mass% or more and 30 mass% or less, more preferably 22 mass% or more and 29% mass or less, and still more preferably 24 mass% or more and 28 mass% or less calculated as SO₃ in terms of oxide. When the quick hardening material contains SO₃ in an amount of 20 mass% or more and 30 mass% or less in terms of oxide, the initial compressive strength of the quick hardening mortar to which the quick hardening material is added is increased, and the surface finish properties can be improved.

Furthermore, the quick hardening material preferably has a loss on ignition before and after a heat treatment from room temperature to 950°C of 0.1 mass% or more and 3 mass% or less, more preferably 0.2 mass% or more and 0.9 mass% or less, and still more preferably 0.3 mass% or more and 0.8 mass% or less. By setting the loss on ignition within the above range, fluidity can be easily ensured, and good surface finish properties can be imparted. The method for adjusting the loss on ignition within the above range can be performed by controlling the temperature when the calcium aluminate-based compound or gypsum is ground and the proportion of a grinding aid. As the grinding aid, for example, ethylene glycol, propylene glycol, diethylene glycol, triethylene glycol, glycerin, or the like can be used.

The loss on ignition can be measured by a method in accordance with apparent loss on ignition described in JIS R 5204, and can be determined from the mass before and after heating when ignition is applied at 950°C.

The quick hardening material of the present embodiment can contain, as a component other than the calcium aluminosilicate-based compound and gypsum, a water reducing agent, an antifoaming agent, a setting modifier, cryolite, silica fume, fly ash, coal ash, blast furnace slag, a colorant, a foaming agent, an alkali metal salt, an alkaline earth metal salt, an alkali metal hydroxide, an alkaline earth hydroxide, or the like.

### [Quick hardening mortar material and quick hardening concrete material]

The quick hardening mortar material of the present invention contains cement, the quick hardening material of the present invention described above, and a fine aggregate. The quick hardening concrete material of the present invention contains cement, the quick hardening material of the present invention described above, a fine aggregate, and a coarse aggregate. In the present description, a mixture containing cement, a quick hardening material, and a fine aggregate is referred to as a quick hardening mortar material, one obtained by kneading the quick hardening mortar material with water is referred to as a quick hardening mortar composition, and one obtained by hardening the quick hardening mortar composition is referred to as a hardened mortar body. In addition, a mixture containing cement, a quick hardening material, a fine aggregate, and a coarse aggregate is referred to as a quick hardening concrete material, one obtained by kneading the quick hardening concrete material with water is referred to as a quick hardening concrete composition, and one obtained by hardening the quick hardening concrete composition is referred to as a hardened concrete body.

### (Quick hardening material)

As the quick hardening material used in the present embodiment, the quick hardening material described above is used.

The content of the quick hardening material is preferably 5 parts by mass or more and 50 parts by mass or less, more preferably 5 parts by mass or more and 40 parts by mass or less, and still more preferably 10 parts by mass or more and 30 parts by mass or less with respect to 100 parts by mass of the cement in the quick hardening mortar material or the quick hardening concrete material. When the content ratio of the quick hardening material is within the above range, the initial strength development can be improved, and good surface finish properties can be imparted.

### (Cement)

The cement used in the present embodiment is not particularly limited, and examples thereof include various types of Portland cements such as ordinary, early strength, ultra-early strength, low heat, and moderate heat Portland cements, various types of mixed cements obtained by mixing blast furnace slag, fly ash, silica fume, or the like with these Portland cements, environmentally friendly cements (eco cements) produced using urban waste incineration ash or sewage sludge incineration ash as a raw material, commercially available fine-particle cements, and white cement, and it is also possible to use various types of cements after being formed into a finely powdered form. It is also possible to use those which are adjusted by increasing or decreasing the amount of components (such as gypsum) normally used in cement. Furthermore, a combination of two or more of these can also be used.

In the present embodiment, it is preferable to select ordinary Portland cement or early strength Portland cement from the viewpoint of providing high initial compressive strength development and good surface finish properties.

In the cement used in the present embodiment, from the viewpoint of production cost and strength development, the Blaine specific surface area value of the cement is preferably 2,500 cm²/g or more and 7,000 cm²/g or less, more preferably 2,750 cm²/g or more and 6,000 cm²/g or less, and still more preferably 3,000 cm²/g or more and 4,500 cm²/g or less.

In the present invention, the Blaine specific surface area value is determined in accordance with JIS R 5201:2015 "Physical testing methods for cement".

The content of cement in the quick hardening mortar material or the quick hardening concrete material is preferably 5 mass% or more and 70 mass% or less, and more preferably 10 mass% or more and 60 mass% or less from the viewpoint of providing high initial compressive strength development and good surface finish properties.

### (Fine aggregate)

As the fine aggregate used in the present invention, a fine aggregate similar to that used in ordinary cement mortar or concrete can be used. That is, river sand, mountain sand, crushed sand, lime sand, silica sand, color sand, sea sand, or the like can be used, and these can be combined.

### (Coarse aggregate)

As the coarse aggregate used in the present invention, a coarse aggregate similar to that used in ordinary concrete can be used. That is, river gravel, mountain gravel, crushed stone, limestone aggregate, artificial aggregate, blast furnace slag aggregate, sea gravel, artificial lightweight aggregate, heavy weight aggregate, or the like can be used, and these can be combined.

The content ratio of the fine aggregate in the quick hardening mortar material is preferably 40 parts by mass or more and 250 parts by mass or less, more preferably 50 parts by mass or more and 230 parts by mass or less, and still more preferably 60 parts by mass or more and 200 parts by mass or less with respect to 100 parts by mass of the cement. When the content ratio of the fine aggregate is within the above range, the initial strength development can be improved, and good surface finish properties can be imparted.

The content ratio of the fine aggregate and the coarse aggregate in the quick hardening concrete material is preferably 40 parts by mass or more and 800 parts by mass or less, more preferably 50 parts by mass or more and 750 parts by mass or less, and still more preferably 60 parts by mass or more and 700 parts by mass or less with respect to 100 parts by mass of the cement. When the content ratio of the fine aggregate and the coarse aggregate is within the above range, the initial strength development can be improved, and good surface finish properties can be imparted.

In the quick hardening mortar material or the quick hardening concrete material, a setting modifier can also be used. The setting modifier may be any material as long as it has a retarding effect on the setting of the quick hardening mortar composition. For example, one or two or more selected from the group including citric acid, gluconic acid, tartaric acid, malic acid, or salts thereof, boric acid, inorganic salts such as borates such as sodium borate, phosphates, alkali metal carbonates, and alkali metal bicarbonates, and saccharides can be used. Among them, one or two or more selected from the group including citric acid, citrates, tartaric acid, tartrates, and alkali metal carbonates are preferable from the viewpoint of adjustment of the hardening time and initial strength development.

The use amount of the setting modifier is preferably 0.1 to 4 parts by mass, more preferably 0.2 to 3 parts by mass, and still more preferably 0.3 to 2 parts by mass with respect to 100 parts by mass of the quick hardening mortar material or 100 parts by mass of the quick hardening concrete material. By setting the amount of the setting modifier within the above range, it is possible to improve the initial compressive strength development.

In the present embodiment, as long as the performance is not adversely affected, one or two or more of siliceous fine powder, an antifoaming agent, a gas foaming substance, a water reducing agent, an AE agent, a rust inhibitor, a water repellent, an antibacterial agent, a colorant, an antifreeze agent, limestone fine powder, air-cooled blast furnace slag fine powder, admixture materials such as sewage sludge incineration ash or its molten slag, urban waste incineration ash or its molten slag, and pulp sludge incineration ash, a thickener, a shrinkage-reducing agent, a polymer, clay minerals such as bentonite and sepiolite, and anionic exchangers such as hydrotalcite, and the like can be used as long as the object of the present invention is not substantially inhibited.

The amount of mixing water used in the quick hardening mortar composition or the quick hardening concrete composition of the present embodiment varies depending on the intended purpose and use and the content ratio of each material, and therefore is not particularly limited, but is preferably 10 parts by mass or more and 70 parts by mass or less, more preferably 14 parts by mass or more and 65 parts by mass or less, and still more preferably 16 parts by mass or more and 60 parts by mass or less with respect to 100 parts by mass of the quick hardening mortar material or 100 parts by mass of the quick hardening concrete composition. When the amount of mixing water is within the above range, strength development can be enhanced, and good surface finish properties can be imparted.

Examples of the method for kneading and mixing each material to produce a quick hardening mortar composition or a quick hardening concrete composition include, but are not particularly limited to, a method in which the materials are put into a container such as a pail can and kneaded and mixed with a hand mixer, a method in which the materials are kneaded and mixed using a mixer or the like, and a method in which the materials are manually mixed.

Examples of a construction method using the produced quick hardening mortar composition or quick hardening concrete composition include a method in which the produced quick hardening mortar composition or quick hardening concrete composition is poured into a construction site, a method in which the quick hardening mortar composition or the quick hardening concrete composition is filled using a pump, a method in which compressed air is blown into the quick hardening mortar composition or the quick hardening concrete composition and the composition is sprayed, and a method in which the composition is applied with a plastering trowel. In addition, there is a method in which the quick hardening mortar composition or the quick hardening concrete composition is laminated using an additive manufacturing apparatus such as a 3D printer, and the laminated quick hardening mortar composition or quick hardening concrete composition is hardened to produce a hardened mortar body or a hardened concrete body, and a shaped object such as a building or a structure is shaped. Examples

Hereinafter, the present invention will be described more specifically with reference to examples, but the present invention is not limited to these examples.

### <Measurement method and evaluation method>

The chemical composition of the calcium aluminosilicate-based compound produced in each experimental example, the vitrification rate, the loss on ignition of a quick hardening material, the compressive strength and the surface finish properties of a hardened mortar body and a hardened concrete body were measured and evaluated by the following methods.

Chemical composition of calcium aluminosilicate-based compound: Measurement was performed by X-ray fluorescence analysis.

Composition of minor components such as Fe₂O₃, MgO, P₂O₅, and ZrO₂: Measurement was performed in accordance with the method described in JIS R 5202:2010.

Vitrification rate: The calcium aluminosilicate-based compound was heated at 1000°C for 2 hours, then slowly cooled at a cooling rate of 5°C/min, powder X-ray diffraction measurement was performed to identify the main peak, and the main peak area S₀ was determined using quantitative software. From the main peak area S obtained by powder X-ray diffraction measurement of the calcium aluminosilicate-based compound before heating, the vitrification rate x was determined using the formula: x (mass%) = 100 x (1 - S/S₀). As the quantitative software, "SIROQUANT" manufactured by Sietronics Pty Ltd. or the like was used.

Loss on ignition: The apparent loss on ignition when ignition was applied from room temperature to 950°C was measured in accordance with JIS R 5204 "Chemical analysis method of cement by X-ray fluorescence".

Compressive strength (hardened mortar body): The compressive strength after 6 hours of age was measured in accordance with JIS R 5201 "Physical testing methods for cement". A case where the compressive strength was 25 N/mm² or more was regarded as acceptable.

Compressive strength (hardened concrete body): The compressive strength after 6 hours of age was measured in accordance with JIS A 1108 "Method of test for compressive strength of concrete". A case where the compressive strength was 24 N/mm² or more was regarded as acceptable.

Surface finish properties (hardened mortar body): A hardened mortar body of 4 cm × 4 cm × 16 cm was produced, and presence or absence of white spots (spots) on both side surface portions after one day of age was visually inspected. In this evaluation, a case where the area covered with spots was 85 cm²/128 cm² or more was rated as ×, a case where the area covered with spots was more than 43 cm²/128 cm² and less than 85 cm²/128 cm² was rated as △, and a case where the area covered with spots was 43 cm²/128 cm² or less was rated as ∘. Those rated as "∘" were regarded as acceptable.

Surface finish properties (hardened concrete body): A concrete composition was placed in a mold of 10 cm × 10 cm × 40 cm to produce a hardened concrete body, and the presence or absence of white spots (spots) on both side surface portions after one day of age was visually inspected. In this evaluation, a case where the area covered with spots was 267 cm²/400 cm² or more was rated as ×, a case where the area covered with spots was more than 133 cm²/400 cm² and less than 267 cm²/400 cm² was rated as △, and a case where the area covered with spots was 133 cm²/400 cm² or less was rated as ∘. Those rated as "∘" were regarded as acceptable.

### (Experimental Example 1)

### [Production of quick hardening material]

A raw material mixture was prepared by blending and mixing calcium carbonate, aluminum oxide, silicon dioxide, iron oxide, magnesium oxide, calcium phosphate, and zirconium oxide so as to achieve a predetermined blending ratio shown in Table 2. The raw material mixture was melted at a heating temperature of 1,600°C for 30 minutes using a high-frequency furnace and then rapidly cooled to synthesize a calcium aluminosilicate-based compound. The vitrification rate was adjusted by changing the rapid cooling conditions. The synthesized calcium aluminosilicate-based compound was ground to adjust the Blaine specific surface area value to 6,000 cm²/g.

The calcium aluminosilicate-based compound after the adjustment was mixed with gypsum at 1:1 to produce a quick hardening material. The content of S in the quick hardening material was determined in accordance with the method described in JIS R 5202:2010. The content of fluorine was measured by ion chromatography, and the content of S was 27 parts by mass in terms of oxide (SO₃), and the content of fluorine was 1,500 ppm.

### (Materials used)

Calcium carbonate: reagent
Aluminum oxide: reagent
Silicon dioxide: reagent
Iron oxide: reagent
Magnesium oxide: reagent
Calcium phosphate: reagent
Zirconium oxide: reagent
Gypsum: Type II anhydrous gypsum, pH 3.0, Blaine specific surface area: 5,000 cm²/g (the composition is shown in Table 1)

**[Table 1]**

| | Anhydrous gypsum (%) | Dihydrate gypsum (%) | CaF₂ (%) |
|---|---|---|---|
| Type II anhydrous gypsum | 97 | 2 | 1 |

### [Production of hardened mortar body]

A mortar composition was prepared by mixing 270 g of a quick hardening material, 630 g of ordinary Portland cement, 9 g of a setting modifier, 1,350 g of a fine aggregate, and 306 g of water at room temperature of 20°C, and hardened to produce a hardened mortar body. The results are shown in Table 2.

### (Materials used)

Cement: Commercially available ordinary Portland cement (manufactured by TAIHEIYO CEMENT CORPORATION, density: 3.15 g/cm³)
Setting modifier: a mixture of 75 parts by mass of potassium carbonate (reagent) and 25 parts by mass of citric acid (reagent)
Fine aggregate: JIS standard sand
Water: tap water

**[Table 2]**

| Test No. | Calcium aluminosilicate composition (mass%) | | | | | | | Vitrification rate | Calcium aluminosilicate content (parts by mass) | Gypsum content (parts by mass) | Loss on ignition (%) | Evaluation results | | Remarks |
|---|---|---|---|---|---|---|---|---|---|---|---|---|---|---|
| | CaO | Al₂O₃ | SiO₂ | Fe₂O₃ | MgO | P₂O₅ | ZrO₂ | | | | | 6-Hour compressive strength (N/mm²) | Surface finish properties | |
| 1-1 | 27.0 | 59.6 | 12.0 | 0.9 | 0.4 | 0.05 | 0.08 | 30 | 100 | 100 | 0..4 | 11.5 | ○ | Comparative Example |
| 1-2 | 49.4 | 37.2 | 12.0 | 0.9 | 0.4 | 0.05 | 0.08 | 98 | 100 | 100 | 0.4 | 28.8 | ○ | Example |
| 1-3 | 65.0 | 21.6 | 12.0 | 0.9 | 0.4 | 0.05 | 0.08 | 15 | 100 | 100 | 0.4 | 12.6 | ○ | Comparative Example |
| 14 | 81.6 | 5.0 | 12.0 | 0.9 | 0.4 | 0.05 | 0.08 | 10 | 100 | 100 | 0.4 | 13.8 | ○ | Comparative Example |
| 1-5 | 53.6 | 5.0 | 40.0 | 0.9 | 0.4 | 0.05 | 0.08 | 50 | 100 | 100 | 0.5 | 10.8 | × | Comparative Example |
| 1-6 | 32.6 | 63.0 | 3.0 | 0.9 | 0.4 | 0.05 | 0.08 | 50 | 100 | 100 | 0.4 | 11.8 | × | Comparative Example |
| 1-7 | 51.0 | 47.0 | 0.6 | 0.9 | 0.4 | 0.05 | 0.08 | 80 | 100 | 100 | 0.4 | 19.6 | × | Comparative Example |
| 1-8 | 49.6 | 46.0 | 3.0 | 0.9 | 0.4 | 0.05 | 0.08 | 94 | 100 | 100 | 0.5 | 32.5 | ○ | Example |
| 1-9 | 49.2 | 46.1 | 3.0 | 0.9 | 0.9 | 0.05 | 0.08 | 94 | 100 | 100 | 0.4 | 26.9 | ○ | Example |
| 1-10 | 49.0 | 45.5 | 3.0 | 0.9 | 1.5 | 0.05 | 0.08 | 92 | 100 | 100 | 0.4 | 21.3 | Δ | Comparative Example |
| 1-11 | 46.5 | 44.0 | 8.0 | 0.9 | 0.4 | 0.05 | 0.08 | 94 | 100 | 100 | 0.5 | 30.0 | ○ | Example |
| 1-12 | 41.6 | 40.0 | 15.0 | 0.9 | 0.4 | 0.05 | 0.08 | 95 | 100 | 100 | 0.5 | 26.6 | ○ | Example |
| 1-13 | 49.6 | 46.0 | 3.0 | 0.9 | 0.4 | 0.0005 | 0.08 | 94 | 100 | 100 | 0.4 | 26.4 | Δ | Comparative Example |
| 1-14 | 49.6 | 46.0 | 3.0 | 0.9 | 0.4 | 0.07 | 0.08 | 94 | 100 | 100 | 0.4 | 26.8 | ○ | Example |
| 1-15 | 49.6 | 46.0 | 3.0 | 0.9 | 0.4 | 0.1 | 0.08 | 94 | 100 | 100 | 0.4 | 26.7 | ○ | Example |
| 1-16 | 46.7 | 43.0 | 3.0 | 0.9 | 0.4 | 6 | 0.08 | 94 | 100 | 100 | 0.4 | 19.3 | Δ | Comparative Example |

As shown in Table 2, Test Nos. 1-2, 1-8, 1-9, 1-11, 1-14, and 1-15, in which CaO, Al₂O₃, SiO₂, MgO, and P₂O₅ were within the scope of the present invention, showed high compressive strength and good surface finish properties. Test Nos. 1-1, 1-3 to 1-7, 1-10, 1-13, and 1-16, in which any of CaO, Al₂O₃, SiO₂, MgO, and P₂O₅ was out of the scope of the present invention, showed low compressive strength and poor surface finish properties.

### (Experimental Example 2)

A hardened mortar body was produced in the same manner as in Experimental Example 1 except that a calcium aluminosilicate-based compound was synthesized by blending and mixing each material so as to achieve a predetermined blending ratio shown in Table 3. The results are shown in Table 3.

**[Table 3]**

| Test No. | Calcium aluminosilicate composition (mass%) | | | | | | | Vitrification rate | Calcium aluminosilicate content (parts by mass) | Gypsum content (parts by mass) | Loss on ignition (%) | Evaluation results | | Remarks |
|---|---|---|---|---|---|---|---|---|---|---|---|---|---|---|
| | CaO | Al₂O₃ | SiO₂ | Fe₂O₃ | MgO | P₂O₅ | ZrO₂ | | | | | 6-Hour compressive strength (N/mm²) | Surface finish properties | |
| 2-1 | 49.4 | 37.2 | 12.0 | 0.9 | 0.4 | 0.05 | 0.08 | 98 | 100 | 100 | 0.4 | 28.8 | ○ | Example (Test No. 1-2) |
| 2-2 | 50.0 | 37.4 | 12.0 | 0.05 | 0.4 | 0.05 | 0.08 | 96 | 100 | 100 | 0.4 | 26.7 | ○ | Example |
| 2-3 | 48.0 | 36.0 | 12.0 | 3.5 | 0.4 | 0.05 | 0.08 | 95 | 100 | 100 | 0.4 | 25.8 | ○ | Example |
| 24 | 49.4 | 37.2 | 12.0 | 0.9 | 0.4 | 0.05 | 0.005 | 96 | 100 | 100 | 0.4 | 26.8 | ○ | Example |
| 2-5 | 49.0 | 37.0 | 12.0 | 0.9 | 0.4 | 0.05 | 0.6 | 96 | 100 | 100 | 0.4 | 26.2 | ○ | Example |

### (Experimental Example 3)

As the calcium aluminosilicate-based compound, a calcium aluminosilicate-based compound was synthesized by blending and mixing each material so as to achieve the blending ratio of Test No. 1-2 in Experimental Example 1.

The calcium aluminosilicate-based compound after grinding was mixed with gypsum at a ratio shown in Table 4 to produce a quick hardening material. In addition, the fluorine content in the quick hardening material was adjusted by adding cryolite (commercially available product) during mixing with gypsum. A hardened mortar body was produced in the same manner as in Experimental Example 1 using the produced quick hardening material. The results are shown in Table 4.

**[Table 4]**

| Test No. | Calcium aluminosilicate content (parts by mass) | Gypsum content (parts by mass) | SO₃ content (parts by mass) | Fluorine content (ppm) | Loss on ignition (%) | Evaluation results | | Remarks |
|---|---|---|---|---|---|---|---|---|
| | | | | | | 6-Hour compressive strength (N/mm²) | Surface finish properties | |
| 3-1 | 100 | 100 | 27 | 1500 | 0.4 | 28.8 | ○ | Example (Test No. 1-2) |
| 3-2 | 100 | 25 | 7 | 400 | 0.2 | 28.0 | ○ | Example |
| 3-3 | 100 | 300 | 80 | 5000 | 1 | 26.4 | ○ | Example |
| 34 | 100 | 100 | 27 | 200 | 0.4 | 27.8 | ○ | Example |
| 3-5 | 100 | 100 | 27 | 45000 | 0.4 | 26.5 | ○ | Example |

### (Experimental Example 4)

A calcium aluminosilicate-based compound was synthesized by blending and mixing each material so as to achieve a predetermined blending ratio shown in Table 5. The calcium aluminosilicate-based compound was mixed with gypsum and a grinding aid at a ratio shown in Table 5, and the mixture was ground to produce a quick hardening material. The loss on ignition was adjusted by the temperature when the calcium aluminosilicate-based compound and gypsum were mixed or the amount of the grinding aid. A hardened mortar body was produced in the same manner as in Experimental Example 1 using the produced quick hardening material.

### (Materials used)

Grinding aid: diethylene glycol

**[Table 5]**

| Test No. | Calcium aluminosilicate composition (mass%) | | | | | | | Vitrification rate | Calcium aluminosilicate content (parts by mass) | Gypsum content (parts by mass) | Grinding temperature (°C) | Addition amount of grinding aid (parts by mass) | Loss on ignition (%) | Evaluation results | | Remarks |
|---|---|---|---|---|---|---|---|---|---|---|---|---|---|---|---|---|
| | CaO | Al₂O₃ | SiO₂ | Fe₂O₃ | MgO | P₂O₅ | ZrO₂ | | | | | | | 6-Hour compressive strength (N/mm²) | Surface finish properties | |
| 4-1 | 49.4 | 37.2 | 12.0 | 0.9 | 0.4 | 0.05 | 0.08 | 98 | 100 | 100 | 25 | 0.5 | 0.4 | 28.8 | ○ | Example (Test No. 1-2) |
| 4-2 | 49.4 | 37.2 | 12.0 | 0.9 | 0.4 | 0.05 | 0.08 | 98 | 100 | 100 | 25 | 0.06 | 0.05 | 28.2 | ○ | Example |
| 4-3 | 49.4 | 37.2 | 12.0 | 0.9 | 0.4 | 0.05 | 0.08 | 98 | 100 | 100 | 25 | 2.7 | 2.5 | 26.2 | ○ | Example |
| 4-4 | 49.4 | 37.2 | 12.0 | 0.9 | 0.4 | 0.05 | 0.08 | 98 | 100 | 100 | 25 | 3.8 | 3.5 | 25.4 | ○ | Example |

### (Experimental Example 5)

### [Production of quick hardening material]

In the same manner as in Experimental Example 1, a calcium aluminosilicate compound was synthesized by blending and mixing each material so as to achieve a predetermined blending ratio shown in Table 6, and the synthesized calcium aluminosilicate compound was ground. The calcium aluminosilicate compound after grinding was mixed with gypsum at 1:1 to produce a quick hardening material.

### [Production of hardened concrete body]

A concrete composition was prepared by mixing 4,050 g of a quick hardening material, 9,450 g of ordinary Portland cement, 135 g of a setting modifier, 21,400 g of a fine aggregate, 32,500 g of a coarse aggregate, and 4,590 g of water at room temperature of 20°C, and hardened to produce a hardened concrete body. The results are shown in Table 6.

### (Materials used)

Cement: Commercially available ordinary Portland cement (manufactured by TAIHEIYO CEMENT CORPORATION, density: 3.15 g/cm³)
Setting modifier: a mixture of 75 parts by mass of potassium carbonate (reagent) and 25 parts by mass of citric acid (reagent)
Coarse aggregate: crushed stone
Fine aggregate: Natural river sand
Water: tap water

**[Table 6]**

| Test No. | Calcium aluminosilicate composition (mass%) | | | | | | | Vitrification rate | Calcium aluminosilicate content (parts by mass) | Gypsum content (parts by mass) | Loss on ignition (%) | Evaluation results | | Remarks |
|---|---|---|---|---|---|---|---|---|---|---|---|---|---|---|
| | CaO | Al₂O₃ | SiO₂ | Fe₂O₃ | MgO | P₂O₅ | ZrO₂ | | | | | 6-Hour compressive strength (N/mm²) | Surface finish properties | |
| 5-1 | 49.4 | 37.2 | 12.0 | 0.9 | 0.4 | 0.05 | 0.08 | 98 | 100 | 100 | 0.4 | 24.2 | ○ | Example |
| 5-2 | 49.6 | 46.0 | 3.0 | 0.9 | 0.4 | 0.05 | 0.08 | 94 | 100 | 100 | 0.5 | 26.4 | ○ | Example |

### Industrial Applicability

A quick hardening material containing the calcium aluminosilicate-based compound of the present invention can provide a quick hardening mortar composition, a quick hardening concrete composition, a hardened mortar body, and a hardened concrete body, which have improved initial compressive strength and can achieve good surface finish properties, and can be suitably used in the fields of civil engineering and construction.

## Claims

1. A calcium aluminosilicate-based compound comprising, as chemical components, 30 mass% or more and 60 mass% or less of CaO, 10 mass% or more and 60 mass% or less of Al₂O₃, 1 mass% or more and 15 mass% or less of SiO₂, 10 ppm or more and 50,000 ppm or less of P₂O₅ in terms of mass ratio, and 0.1 mass% or more and 1 mass% or less of MgO.

2. The calcium aluminosilicate-based compound according to claim 1, which contains, as a chemical component, Fe₂O₃ in an amount of 0.1 mass% or more and 3 mass% or less.

3. The calcium aluminosilicate-based compound according to claim 1 or 2, which contains, as a chemical component, ZrO₂ in a mass ratio of 100 ppm or more and 5,000 ppm or less.

4. A quick hardening material comprising 50 parts by mass or more and 250 parts by mass or less of gypsum with respect to 100 parts by mass of the calcium aluminosilicate-based compound according to claim 1 or 2.

5. The quick hardening material according to claim 4, which contains S (sulfur) in an amount of 20 mass% or more and 30 mass% or less in terms of oxide.

6. The quick hardening material according to claim 4, which contains fluorine in a mass ratio of 300 ppm or more and 40,000 ppm or less.

7. The quick hardening material according to claim 4, wherein a loss on ignition before and after a heat treatment from room temperature to 950°C is 0.1 mass% or more and 3 mass% or less.

8. A quick hardening mortar material comprising cement, the quick hardening material according to claim 4, and a fine aggregate.

9. A quick hardening concrete material comprising cement, the quick hardening material according to claim 4, a fine aggregate, and a coarse aggregate.

10. A method for shaping a hardened mortar body, comprising:
producing a quick hardening mortar composition by kneading and mixing cement, the quick hardening material according to claim 4, water, and a fine aggregate;
laminating the quick hardening mortar composition; and
hardening the quick hardening mortar composition to produce a hardened mortar body.

11. A method for shaping a hardened concrete body, comprising:
producing a quick hardening concrete composition by kneading and mixing cement, the quick hardening material according to claim 4, water, a fine aggregate, and a coarse aggregate;
laminating the quick hardening concrete composition; and
hardening the quick hardening concrete composition to produce a hardened concrete body.
